# EUROPEAN PATENT SPECIFICATION

(11) **EP 1 690 479 B1**
(45) Date of publication and mention of the grant of the patent: **14.04.2010**
(21) Application number: 06250589.6
(22) Date of filing: 03.02.2006
(51) Int. Cl.: A47J 31/06

(54) **Coffee outlet of coffee machines**
Auslass von Kaffeemaschinen
Orifice de sortie d'une machine à café

(30) Priority: 10.02.2005 ES 200500300
(43) Date of publication of application: 16.08.2006
(73) Proprietor: CELAYA, EMPARANZA Y GALDOS, INTERNACIONAL, S.A., 01013 Vitoria (Alava) (ES)
(72) Inventor: Jordana, Luis Moreno, 01013 Vitoria (Alava) (ES)
(74) Representative: ZBM Patents

(56) References cited:
- EP-A- 1 319 357
- US-A- 5 150 645

## Description

### FIELD OF THE INVENTION

The present invention relates to coffee machines, in particular domestic espresso coffee machines which comprise a pump which impels pressurised hot water so as to pass though a dose of ground coffee, either as a filter pod or deposited in a filter, which is accommodated in a filter housing, which filter housing is fitted in a filter holder which is includes one or more outlet pipes for the produced coffee infusion.

In one particular aspect the present invention relates to improvements which concern devices for the production of foamed coffee (café crème) and devices which are designed such that, when the coffee machine serves coffee to two cups simultaneously, the quantity served in each cup is the same.

### PRIOR STATE OF THE ART

Foamed coffee is produced as an emulsion of a coffee infusion and air, and is obtained by forcing a coffee infusion through fine ducts in a filter housing, thus increasing the pressure. After passage beyond these fine ducts, there occurs an expansion or a decrease in this pressure, which causes the division of the coffee infusion into fine droplets, which is close to a state of spraying, in which mixing with air is assisted.

Spanish utility model no 200103033 is known in this field, and discloses a device which is designed to permit gradual regulation of the quantity of foamed coffee. This device comprises a body which is connected at its base to the filter housing, and forms an inner chamber into which is screwed a vertical screw which has an inner aperture, and which in its interior incorporates a helical compression spring which thrusts a ball against an upper aperture in this body, which communicates with the interior of the filter housing. By controlling the degree of the screwing of the screw into the body, a smaller or larger amount of foamed coffee will be obtained, because greater or lesser pressure will be necessary to compress the spring and permit output of the coffee infusion. This design works well, but, over a period of time, the screw can loosen and the quantity of foamed coffee obtained will become gradually less.

Furthermore, this type of coffee machine suffers from a disadvantage in general, in that, when the filter holder has two pipes, and two cups are served simultaneously, the filling is frequently unequal in the two cups. This is also an uncontrollable phenomenon, because it does not always occur, or does not always occur in the same manner. Sometimes, the filling is the same in both cups and on other occasions it is not, and, in this latter case, the difference in filling is variable. It appears that, like any liquid, the coffee infusion tends to flow along one path partially to the detriment of the other, inter alia because of the effects of surface tension, defects of horizontality, dirtiness or irregularities in the base of the filter holder, because of how the jet of coffee infusion emerges towards the base of the filter holder, and because of occasional vibrations in the surroundings of the coffee machine.

### EXPLANATION AND ADVANTAGES OF THE INVENTION

In view of this situation, one of the improvements provided by the present invention as defined in claim 1 resides in the centre of the base of the filter housing including a ball valve which is biased by a helical compression spring, such that the ball and the spring are thrust in a chamber of the valve, wherein, by means of respective upper and lower apertures, the chamber communicates with the interior of the filter housing and the cavity in the filter holder, which ball is installed between the lower side of the upper aperture and the upper end of the spring, and which spring is installed between the ball and the lower aperture, which lower aperture has a conical shape which narrows in the downward direction and is obtained by pressure forming. In this solution, there is no screwing of parts, since there exists only the valve body in which the ball and the spring are installed in a manner which is confined and cannot be dismantled, such that the operative behaviour is always the same, and therefore there will always be an equal quantity of foamed coffee in the produced coffee infusion. Varying the resilient characteristics of the spring provides for variation of the quantity of foamed coffee for a specific working pressure of the pump, and vice versa. As well as this functional advantage, the present invention is advantageous in using fewer parts, and furthermore the appearance of the device is improved. This can be appreciated when the coffee machine is in standby without the filter holder fitted. This detail is important taking into consideration the fact that domestic rather than industrial coffee machines are involved.

Another improvement of an embodiment of the present invention resides in the filter holder having two pipes with diameters which are the same as one another, such that the flow drained by the pipes is advantageously less than the flow as supplied by the pump, and, between the two pipes, the filter holder has a curved convex base which has its cusp aligned vertically with the axis of the flow of the coffee infusion which is supplied by the valve, whilst the pipes have a width which is suitable for assuring a laminar flow of the produced coffee infusion. The functionality of this solution resides in the fact that, since the pipes cannot discharge the entire flow received from the valve, damming occurs, and the level of the coffee infusion subsequently rises above the cusp of the curved convex base of the filter holder. Consequently, from this moment onwards, the coffee infusion is discharged through the pipes by gravity, and, in view of the designed width of the pipes, the flow Is highly laminar, which ensures that the flow through the pipes is the same, thereby ensuring that two cups are filled equally with the coffee infusion, and the quantity of foamed coffee produced is maintained in its course through these pipes. In addition, this device is compatible with the use of a filter housing for a dose of ground coffee, such as in a single-dose pod, which is suitable for a single cup or two cups of coffee, still using the filter holder with two pipes.

### DRAWINGS AND REFERENCES

In order to understand better the nature of the present invention, the attached drawings represent a preferred embodiment, which is in the nature of a purely illustrative and non-limiting example.

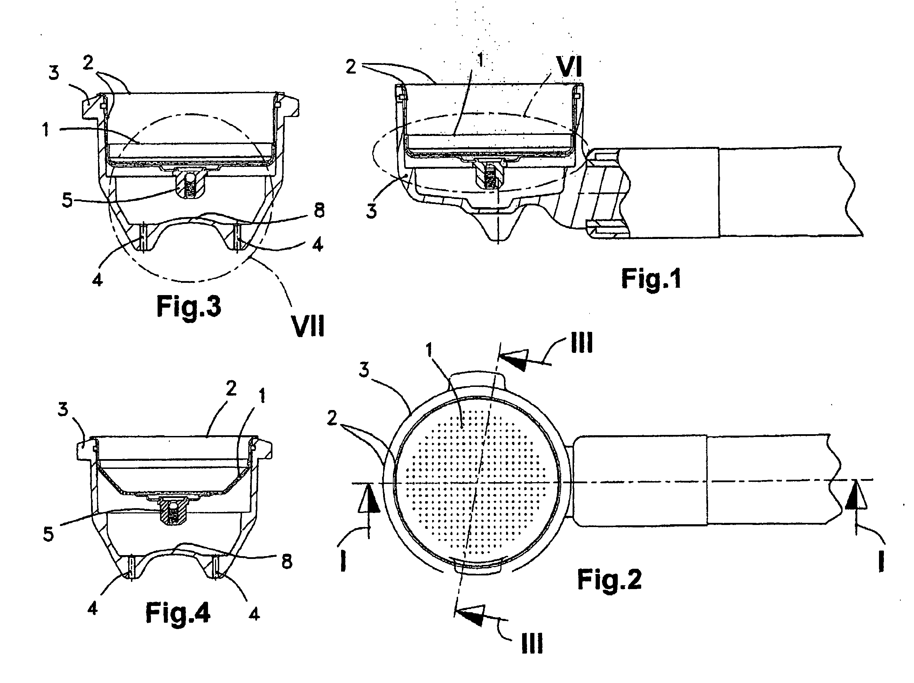

Figure 1 is a lateral, part-sectional view (along section I - I in Figure 2) of a filter holder in accordance with a preferred embodiment of the present invention;
Figure 2 is a plan view from above of the filter holder of Figure 1;
Figure 3 is a vertical sectional view (along section III - III in Figure 2) of a filter housing for containing two doses of ground coffee, typically for two cups of coffee;
Figure 4 is a vertical sectional view (along section III - III in Figure 2) of a filter housing for containing a single dose of ground coffee, typically for one cup of coffee;
Figure 5 is an exploded, part-sectional view showing the sub-assembly formed by the valve body, the valve ball and the spring, before providing for the pressure adjustment of the tip of the valve body and the upper thrusting of the valve ball relative to the valve body;
Figure 6 is an enlarged view of the detail VI illustrated in Figure 1; and
Figure 7 is an enlarged view of the detail VII illustrated in Figure 3.

The Figures contain the following references:
1. Filter
2. Filter housing
3. Filter holder
4. Filter holder (3) pipes
5. Valve body
6. Valve ball
7. Helical compression spring
8. Filter holder (3) curved convex base
9. Valve body (5) upper aperture
10. Valve body (5) lower aperture
11. Valve body (5) chamber

### DESCRIPTION OF A PREFERRED EMBODIMENT

With reference to the aforementioned drawings and references, the accompanying drawings illustrate a preferred embodiment of the present invention, which relates to espresso coffee machines which comprise a pump which impels pressurised hot water so as to pass though a dose of ground coffee which is contained in a filter 1 and accommodated in a filter housing 2, which filter housing 2 is fitted in a filter holder 3 which is provided with one or more, in this embodiment two outlet pipes 4 for the produced coffee Infusion.

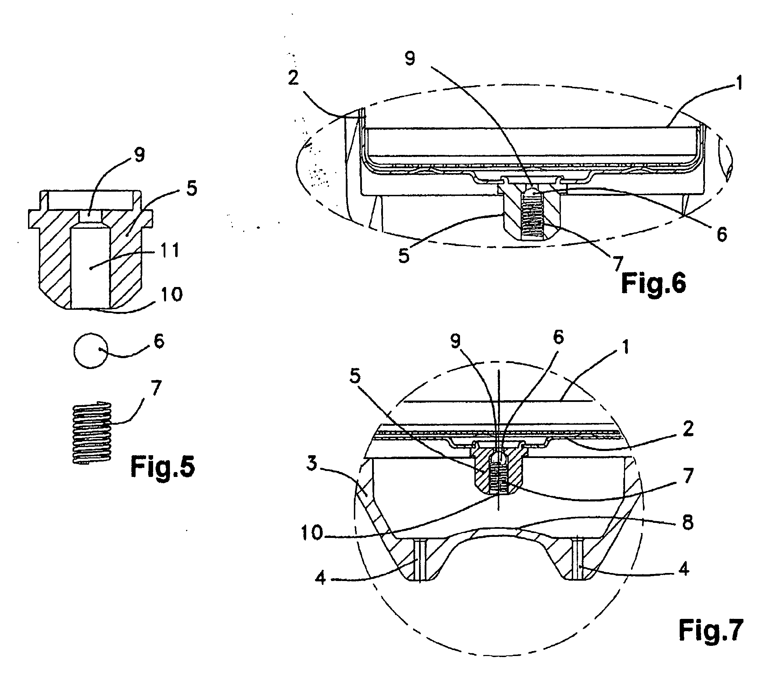

One aspect of the present invention is illustrated particularly in Figures 5 and 6. As illustrated, a ball valve is fitted to the centre of the base of the filter housing 2. The ball valve comprises a body 5 which includes a chamber 11 which includes upper and lower apertures 9, 10 which provide for fluid communication respectively with the interior of the filter housing 2 and the cavity of the filter holder 3, a ball 6 which is movably disposed in the chamber 11 below a lower side of the upper aperture 9 thereof, and a helical compression spring 7 which is disposed in the chamber 11 between the lower aperture 10 thereof and the ball 6 such as to bias the ball 6 upwardly to close the upper aperture 9 of the chamber 11. The lower aperture 10 has a conical shape which narrows in the downward direction and is obtained by pressure forming.

Figure 5 illustrates the components of the ball valve before assembly in an inseparable manner by means of adjustment of the tip of the valve body 5, which then contains permanently in its interior the ball 6 and the spring 7, thus providing the definitive operative configuration which is installed in the base of the housing 2, as illustrated in Figure 6.

Another aspect of an embodiment of the present invention is illustrated particularly in Figure 7. As illustrated, the filter holder 3 includes two pipes 4 with diameters which are the same as one another, and are such that the flow as drained by the pipes 4 is advantageously less than the flow as supplied by the pump, and, between the pipes 4, the filter holder 3 has a curved convex base 8 which has its cusp aligned vertically with the axis of the flow of the coffee infusion which is supplied by the valve. In a preferred embodiment the pipes 4 have a width which is suitable for assuring a laminar flow of the produced coffee infusion. By means of this configuration, the flow of liquid provided by the valve falls onto the curved convex base 8 of the filter holder 3 with a flow rate greater than that which can be drained by the pipes 4, thus forming a well, the level of which rises above the upper level of the curved convex base 8, and the flow through the pipes 4 begins to occur by gravity in a laminar manner, and, with an equal flow for each pipe 4, thus providing that the quantity of coffee served in each cup is the same, where a cup is disposed beneath each of the pipes 4. In this embodiment the same filter holder 3, with two pipes 4, can be used equally well for a single dose of ground coffee, such as provided in a single-dose pod, where served in a single cup via both pipes 4 or into two cups via separate ones of the pipes 4.

## Claims

1. A coffee output of domestic espresso coffee machines, comprising a pump which impels pressurised hot water so as to pass through a dose of ground coffee, or a single-dose pod, deposited in a filter (1) which is accommodated in a filter housing (2), which filter housing (2) is fitted in a filter holder (3) which is provided with one or more outlet pipes (4) for the infusion of coffee produced, wherein, in the centre of the base of the housing (2), there is secured a ball (6) valve (5) which is fitted against a helical compression spring (7) such that the ball (6) and the spring (7) are thrust in a chamber (11) of the valve (5), wherein, by means of respective upper (9) and lower (10) apertures, the chamber (11) communicates with the interior of the filter housing (2) and the cavity in the filter holder (3), which ball (6) is installed between the lower side of the upper aperture (9) and the upper end of the spring (7), and which spring (7) is installed between the ball (6) and the lower aperture (10) which has a conical shape which narrows in the downward direction and is obtained by pressure forming.

2. The coffee output of claim 1 wherein the filter holder (3) includes two pipes (4) which have the same diameter and are such that the flow drained by the same is less than the flow as supplied by the pump.

3. The coffee output of claim 1 or claim 2, wherein the filter holder (3) includes a curved convex base (8) between the pipes (4) which has its cusp aligned vertically with the axis of the flow of the coffee infusion as supplied by the valve.

4. The coffee output of claim 2 or 3, wherein the pipes (4) provide for a laminar flow therethrough.

5. A filter holder incorporating the filter housing of any of claims 1 to 4.

6. A coffee machine including the filter holder of claim 5.

## Patentansprüche

1. Kaffeeauslass von Espressomaschinen für den Hausgebrauch, mit einer Pumpe, die unter Druck stehendes heißes Wasser vorantreibt, um es durch eine Dosis gemahlenen Kaffee, oder eine Einzeldosis-Kapsel zu pressen, die in einem Filter (1) aufgenommen ist, der in einem Filtergehäuse (2) untergebracht ist, wobei das Filtergehäuse (2) in einem Filterhalter (3) eingesetzt ist, der ein oder mehrere Auslassrohre (4) für den hergestellten Kaffeeaufguss besitzt, wobei im Zentrum der Gehäusegrundplatte (2) ein Kugel(6)ventil (5) fest angebracht ist, das gegen eine Schraubendruckfeder (7) gesetzt ist, so dass die Kugel (6) und die Feder (7) in eine Kammer (11) des Ventils (5) gedrückt werden, wobei die Kammer (11) über die jeweilige obere (9) und untere (10) Öffnung mit dem Inneren des Filtergehäuses (2) und dem Hohlraum des Filterhalters (3) verbunden ist, und die besagte Kugel (6) zwischen der Unterseite der oberen Öffnung (9) und dem oberen Ende der Feder (7) angebracht ist, und die besagte Feder (7) zwischen der Kugel (6) und der unteren Öffnung (10), die eine konische, sich nach unten verengende Form hat und durch Druckumformung erstellt wird, eingebaut ist.

2. Kaffeeauslass nach Anspruch 1, bei dem der Filterhalter (3) zwei Auslassrohre (4) umfasst, die denselben Durchmesser haben und so beschaffen sind, dass die von ihnen abgegebene Ablaufmenge geringer als die von der Pumpe gelieferte Durchflussmenge ist.

3. Kaffeeauslass nach Anspruch 1 oder Anspruch 2, bei dem der Filterhalter (3) eine gekrümmte konvexe Grundplatte (8) zwischen den Auslassrohren (4) umfasst, deren Scheitelpunkt senkrecht nach der Strömungsachse des Kaffeeausgusses, der vom Ventil abgegeben wird, ausgerichtet ist.

4. Kaffeeauslass nach Anspruch 2 oder 3, bei dem die Auslassrohre (4) für eine laminare Strömung durch denselben sorgen.

5. Filterhalter mit eingebautem Filtergehäuse nach einem der Ansprüche 1 bis 4.

6. Kaffeemaschine einschließlich des Filterhalters nach Anspruch 5.

## Revendications

1. Sortie de café de machines à café espresso domestiques, comprenant une pompe qui pousse de l'eau chaude sous pression pour la faire passer à travers une dose de café moulu, ou une dosette à dose unique, déposée dans un filtre (1) qui est logé dans un logement de filtre (2), lequel logement de filtre (2) est ajusté dans un support de filtre (3) qui est pourvu d'un ou plusieurs tuyaux de sortie (4) pour l'infusion du café produit, dans laquelle, au centre de la base du logement (2), on a fixé une soupape (5) à bille (6) qui est ajustée contre un ressort de compression hélicoïdal (7) de telle sorte que la bille (6) et le ressort (7) sont plongés dans une chambre (11) de la soupape (5), dans laquelle, au moyen des ouvertures supérieure (9) et inférieure (10) respectives, la chambre (11) communique avec l'intérieur du logement de filtre (2) et la cavité dans le support de filtre (3), laquelle bille (6) est installée entre le côté inférieur de l'ouverture supérieure (9) et l'extrémité supérieure du ressort (7), et lequel ressort (7) est installé entre la bille (6) et l'ouverture inférieure (10) qui a une forme conique qui se rétrécit dans la direction vers le bas et est obtenue par formage sous pression.

2. Sortie de café selon la revendication 1, dans laquelle le support de filtre (3) comprend deux tuyaux (4) qui ont le même diamètre et sont tels que l'écoulement drainé par ceux-ci est inférieur à l'écoulement tel que fourni par la pompe.

3. Sortie de café selon la revendication 1 ou la revendication 2, dans lequel le support de filtre (3) comprend une base convexe courbe (8) entre les tuyaux (4) laquelle a son sommet aligné verticalement avec l'axe de l'écoulement de l'infusion de café tel que fourni par la soupape.

4. Sortie de café selon la revendication 2 ou 3, dans laquelle les tuyaux (4) assurent un écoulement laminaire à travers eux.

5. Support de filtre incorporant le logement de filtre selon l'une quelconque des revendications 1 à 4.

6. Machine à café comprenant le support de filtre selon la revendication 5.
